# EUROPEAN PATENT SPECIFICATION

(11) **EP 2 940 337 B1**
(45) Date of publication and mention of the grant of the patent: **27.06.2018**
(21) Application number: 14166517.4
(22) Date of filing: 30.04.2014
(51) Int. Cl.: F16D 27/112, F02B 39/12, F16D 27/14, F16C 23/08, F16C 25/08

(54) **A supercharger clutch arrangement**
Aufladekupplungsanordnung
Agencement d'embrayage de surcompresseur

(43) Date of publication of application: 04.11.2015
(73) Proprietor: Volvo Car Corporation, 40531 Göteborg (SE)
(72) Inventor: Toma, Amir, 41843 Göteborg (SE); Andersson, Niclas, 44254 Ytterby (SE); Hermansson, Jesper, 41306 Göteborg (SE); Johannesson, Hans, 41719 Göteberg (SE); Larzenius, Stefan, 41653 Göteborg (SE); Wedel, Martin, 426 77 Västra Frölunda (SE)
(74) Representative: Volvo Car Corporation

(56) References cited:
- EP-A1- 0 545 189
- EP-A1- 0 557 598
- EP-A1- 2 208 900
- EP-A1- 2 423 522
- EP-A2- 1 124 044
- EP-A2- 1 847 726
- WO-A2-2012/142016
- DE-A1- 19 818 059
- DE-U1-202009 009 806
- GB-A- 2 185 198
- JP-A- 2006 170 299
- JP-A- 2012 189 068
- US-A- 2 180 412
- US-A- 2 970 681
- US-A- 3 297 122
- US-A- 3 307 669
- US-A- 3 550 739
- US-A- 4 953 517
- US-A- 5 052 534
- US-A1- 2013 160 749

## Description

### TECHNICAL FIELD

A supercharger clutch arrangement comprising an input shaft connected to a first engagement portion and an output shaft connected to a second engagement portion. The first and second engagement portions are arranged to connect and engage each other by frictional forces upon connection via corresponding frictional surfaces. The input shaft is placed in first and second bearings.

### BACKGROUND ART

It is known to use a supercharger in a vehicle in order to boost an engine as a single boosting device for the whole range of the engine RPM and now also combined with a second boosting device and use the supercharger on low to midrange RPM. The supercharger is connected to the engine via an input side, usually a pulley that drives the supercharger but could also be driven by an electrical motor or planetary gear. The supercharger comprises a clutch for handling engagement and disengagement of the supercharger. The supercharger arrangement comprises an input shaft connected to the input side on one end and connected to a first engagement portion on the other end, and an output shaft connected to a second engagement portion on one end and a fan arrangement on the other end. The first and second engagement portions are arranged to connect and engage each other by frictional forces upon connection. The supercharger uses the clutch to be utilized only when needed, required either to be turned on by torque request from engine or disengaged for fuel economy reasons). The supercharger typically disengages at a predetermined engine RPM, where a turbocharger may take over.

One example of a suitable controlling device for a supercharger used on an engine is an electromagnetic clutch that electromagnetically controls the engagement and disengagement as found in AC compressors. By energizing the coil the electromagnetic field is activated by the first and second engagement portions are electromagnetically attracted to each other. The first engagement portion rotates with a high delta speed where one part may have much lower RPM, which means that it is not preferable to immediately get both engagement portions to rotate at the same speed due to the high inertia of the supercharger stealing to much engine torque at once. Hence, in order to allow the second engagement portion to start rotate, a gradual increase in engagement is necessary to allow the second engagement portion to gradually pic up rotational speed. The gradual increase in engagement is possible due to the frictional forces and that the contact surfaces between the first engagement portion and the second engagement portion are allowed to glide against each other at the same time. This friction and gliding phase until the first and second engagement portion rotate at the same speed, hereinafter is called "slip". The slip during the engagement phase also avoids engine torque drops. EP 0545 189 A1 and JP 2012 189068 A discloses a supercharger clutch arrangement comprising an input shaft connected to a first engagement portion and an output shaft connected to a second engagement portion, the first and second engagement portions being arranged to connect and engage each other by frictional forces upon connection via corresponding frictional surfaces, the input shaft being placed in first and second bearings. EP 0545 189 A1 further discloses that the first and/or second bearing are arranged to allow the input shaft to slide in an axial direction.
US 3,297,122 A discloses a friction coupling in which a coupling torque is derived by axial gripping engagement between relatively rotatable armature and magnet rings, the armature ring being a centrally apertured disk mounted for axial shifting. A device automatically takes up wear at the friction faces of the rings and maintaining the same separated by a narrow gap of predetermined axial width when the magnet is inactive.
US 2,970,681 A discloses a magnetic friction clutch or brake of the type in which friction rings are normally maintained separated from each other by a narrow gap and drawn into axial gripping engagement by magnetic flux threading a toroidal circuit through the rings.

### SUMMARY OF THE INVENTION

One problem with prior art is a wobbling/pulsating high acoustic noise during the slip. The noise need to be decreased in order to meet increasing legislative demands on maximum noise.
The object of the invention is to remedy the problems described with prior art by a supercharger clutch arrangement according to the preamble of claim 1. The object is solved by the characterizing portion of claim 1. The input shaft is driven by a driving unit, for example by the vehicle engine for rotation due to engine rotation, an electric motor or a planetary gear. Hence, the clutch arrangement comprises a means for connecting the input shaft to the driving unit. One example is a pulley connected to the shaft, wherein the pulley is driven by, for example, a chain, a belt, a gear assembly, or another suitable means for driving the supercharger.
Gradual increase in engagement is possible due to the frictional forces and that the contact surfaces between the first engagement portion and the second engagement portion are allowed to glide against each other at the same time. This friction and gliding phase until the first and second engagement portion rotate at the same speed, hereinafter is called "slip".
During clutch engagement and slip, the ability for the input shaft to slide axially in the first and/or second bearing has the advantage of significantly reducing torsional, axial and bending vibrations of the input shaft and thus corresponding vibrations of the first and second engagement portions and consequently also for the output shaft. Hence, acoustic noise is significantly reduced or annihilated during slip. A further advantage is significantly reduced wear of the clutch material, i.e. of the friction material of the first and second engagement portions.

Reasons for the advantages of an axially compliant first and/or second bearing may be summarized in less coupling of modal behavior in different directions, such as in bending, in torsion and axial modes. Further reasons are a resulting constant load distribution between the bearings as well as a proportional loading of axial and radial directions within each bearing, respectively.

In one example, the compliance is achieved by the first and/or second bearing having an axial clearance that allows for the input shaft to slide axially a predetermined distance. Here, the first and/or second bearing is fixedly attached to the input shaft by an inner race and to a cover by an outer race. Should only one of the first and second bearings have axial clearance to allow axial movement of the input shaft, that bearing is fixedly attached to the input shaft and the cover. Should both bearings have axial clearance to allow axial movement of the input shaft, both bearings are fixedly attached to the input shaft and the cover.

According to another example embodiment, the compliance is achieved by the first and/or second bearing being fixedly attached to the input shaft by an inner race and wherein an outer race is movably positioned in a cover in the axial direction. The outer race is advantageously attached to the cover via a resilient member. According to one example embodiment, the resilient member is a spring being preloaded to exert pressure between the cover and the outer race to remove internal clearance. A damper may also be arranged with the resilient member in order to hinder attenuation of the spring loaded bearing. Both bearings could be arranged in the described floating arrangement, but it is possible to also arrange only one of the bearings. Should only one bearing be arranged in a floating arrangement, the other bearing could be arranged with an axial clearance according to the above with the outer race fixedly attached to the cover and the inner race fixedly attached to the input shaft.

The clutch arrangement could be an electromagnetic clutch with a control function that electromagnetically controls the engagement and disengagement. The first engagement portion then comprises a coil and a rotor for engaging and disengaging the first and second engagement portions. The rotor comprises the frictional surface and an electromagnetic material and wherein the second engagement portion comprises an electromagnetic material and a corresponding friction surface. By energizing the coil an electromagnetic field is activated by the first and second engagement portions so that they become electromagnetically attracted to each other.

The object of the invention is according to a further example embodiment to remedy the problems described with prior art by a supercharger clutch arrangement comprising an input shaft connected to a first engagement portion and an output shaft connected to a second engagement portion. The first and second engagement portions are arranged to connect and engage each other by frictional forces upon connection via corresponding frictional surfaces. The input shaft is placed in first and second bearings.

The first and/or second bearing could be arranged to allow the input shaft to slide in an axial direction according to the above, but could also be arranged without allowing the input shaft to slide in an axial direction. The input shaft is driven is driven according to the above. The advantages of the input shaft being able to slide in the axial direction have been stated above.

According to the further example, the first engagement portion comprises a first electromagnetic material strip, a second electromagnetic strip and a friction strip of non-electromagnetic material there between. The first electromagnetic strip is positioned closer to the rotation centre of the first engagement portion than the second electromagnetic strip. The first engagement portion is rotation symmetric about an axially extended centrum axis of the input shaft. The first electromagnetic material strip, the second electromagnetic strip and the friction strip are arranged in a rotation symmetric about the centrum axis.

One benefit of separating the first and second electromagnetic material strips by the friction strip is that the electromagnetic attraction force between the first engagement portion and the second engagement portion is positioned far out from the rotational centre of the first engagement portion and the second engagement portion and therefore gives the benefit of a more even radial distribution of surface engagement between the first engagement portion and the second engagement portion. Another advantage is that when the frictional surfaces are getting worn, the pressure between the surfaces will not be allocated to the centre of the first engagement portion and the second engagement portion.

According to one example embodiment, the second electromagnetic material strip is arranged in connection to an outer edge of the first engagement portion. This has the advantage of maximizing the allocation of electromagnetic attraction away from the centre of the first and second engagement portions. The more radially outward the contact surface is between the first and second engagement portion during slip, the less forming of contact pattern on the inner diameter and thus less wobbling and emitted noise. The first electromagnetic strip may be positioned at a distance from the rotation centre of the first engagement portion in order to further move the overall contact surface away from the centre of rotation.

Creating a design that during the engagement keeps contact pattern from forming on the inner diameter of the clutch has proven central to avoid rotor wobbling. If the rotor wobbling is avoided the risk of omitting noise during clutch engagement and slip is reduced. Reasons for the advantage of a larger diameter clutch contact pattern are related to the resulting axial contact stiffness.

The electromagnetic material strip arrangement described above could advantageously be combined with a sliding input axis according to the above, with the common advantage of less emitted noise.

The first and/or second bearing could be arranged to allow the input shaft to slide in an axial direction according to the above, but could also be arranged without allowing the input shaft to slide in an axial direction. The input shaft is driven is driven according to the above. The advantages of the input shaft being able to slide in the axial direction have been stated above.

The clutch arrangement could be an electromagnetic clutch and the electromagnetic material strip arrangement described above could advantageously be combined with a sliding input axis according to the above, with the common advantage of less emitted noise.

According to the invention, the second engagement portion comprises a hub unit attached to the output shaft. The hub unit comprises splines on an outer surface. The second engagement portion comprises a friction plate that connects to the first engagement portion upon engagement of the clutch. The friction plate comprises splines on an inner surface, wherein the friction plate via the splines is slidably mounted on the hub unit in an axial direction of the output shaft. The second engagement portion comprises a spring arrangement arranged in connection to the hub unit and the friction plate. The spring arrangement is arranged to apply a force onto the friction plate in a direction away from the first engagement portion. The force is applied where the spring arrangement is positioned in the second engagement portion and since this is in the central portion, i.e. close to rotation centre, the outer portions of the second engagement portion, i.e. the friction plate, which means that during engagement and attraction to the first engagement portion, the outer portions of the friction plate, with respect to rotation centre, has a stronger connection the first engagement portion.

This has the advantage of maximizing the allocation of contact surface away from the centre of the first and second engagement portions. The more radially outward the contact surface is between the first and second engagement portion during slip, the less forming of contact pattern and thus wobbling and emitted noise.

In one example embodiment, the friction plate is made of an electromagnetic material and could be used in an electromagnetic material strip arrangement described above and/or combined with a sliding input axis according to the above, with the common advantage of less emitted noise.

The centrally positioned spring arrangement is especially advantageous in combination with the electromagnetic material strip arrangement described above since both embodiments have the advantage of allocation of contact surface away from the centre of the first and second engagement portions.

Creating a design that during the engagement keeps contact pattern from forming on the inner diameter of the clutch has proven central to avoid rotor wobbling. If the rotor wobbling is avoided the risk of omitting noise during clutch engagement and slip is reduced.

In one example, the spring arrangement is positioned on that side of the second engagement portion that faces the first engagement portion. In another example it is positioned on the other side of the second engagement portion. In the first example, the spring pushes and in the other example the spring pulls.

According to one example embodiment, the clutch arrangement according to any one of the above described examples is an electromagnetic clutch arrangement. The first engagement portion comprises a coil and a rotor for engaging and disengaging the first and second engagement portions. The rotor comprises the frictional surface and an electromagnetic material and wherein the second engagement portion comprises an electromagnetic material.

According to one example embodiment that could be combined with any one of the above described examples, the corresponding frictional surfaces are three dimensionally formed and congruent for guiding the frictional surfaces towards each other for rotation about a common rotational axis coinciding with the rotational axis of the input shaft. The benefit is that the frictional surfaces are guided towards each other for rotation about a common rotational axis coinciding with the rotational axis of the input shaft. The surfaces may be conical, convex/concave, or any other suitable shape that guides the surfaces to a common rotational centre during slip.

According to one example embodiment that could be combined with any one of the above described examples, the input shaft and the output shaft comprise guiding means for guiding the shafts to a common rotational axis upon connection, wherein the clutch arrangement comprises a pilot bearing arranged on the input shaft and/or the output shaft for allowing different rotational speed of the shafts upon connection. The pilot bearing is advantageously engaged at all times and therefore connects the input shaft and the output shaft both during a common and different rotation speed of the first and second engagement portion.

Creating a design that during the engagement helps center the second engagement portion relative to the rotor, advantageously avoids a rotating resulting contact force. This gives a uniform contact pattern around the circumferential parts of the first and second engagement portions, which has been proven to be an important factor. If the rotor wobbling is avoided the risk of omitting noise during clutch engagement and slip is reduced.

According to one example embodiment that could be combined with any one of the above described examples, a tuned vibrational damper is arranged on the input shaft and/or the output shaft.
The tuned vibrational damper is advantageously tuned to supress the first main system torsion Eigen frequency of the rotating first and second engagement portions upon connection and slip.

According to one example embodiment that could be combined with any one of the above described example, the output shaft is placed in a third and fourth bearing. In the clutch arrangement a transmission unit is positioned on the output shaft for engagement of a compressor unit, wherein the third and fourth bearings are positioned between the transmission unit and the second engagement unit. The output shaft is placed in a fifth bearing positioned on the other side of the transmission unit with relation to the third and fourth bearing for reducing shaft misalignment due to pressure from the compressor unit.

This gives an improvement of bearing attachment at both the input shaft and the output shaft, in order to reduce shaft misalignment over the clutch. This may change the bearing solution of the gear arrangement to avoid bending moment of the output shaft, due to shaft over hang and unsupported gear blank on far end of output shaft. This measure reduces the modal coupling between bending and torsion vibrations and also significantly reducing these vibrations as well. Thus the measure will annihilate or significantly reduce the noise and clutch wear problems as described above.

According to one example embodiment that could be combined with any one of the above described examples, the first engagement portion is in the form of a rotor comprising an outer wall extending in the axial direction and an inner wall extending in the axial direction. The outer wall and the inner wall are connected by a plate comprising a friction strip and first and second electromagnetic strips. The outer wall, the inner wall and the plate create a space in which a coil is positioned for creating electromagnetic flux in the first and second electromagnetic strips. The rotor comprises a hub portion comprising a channel for fitting the input shaft. The channel has a widening portion towards the second engagement portion for receiving a protruding portion from the second engagement portion during engagement. The thickness of material between the channel and the inner wall of the space is thin enough to give a resilient feature of the rotor between the widening portion and the inner wall such that an outer portion of the rotor may flex compared to the hub portion of the rotor.

The thin enough example is especially advantageous in combination with either of or both of the centrally positioned spring arrangement and the electromagnetic material strip arrangement described above since all embodiments have the advantage of allocation of contact surface away from the centre of the first and second engagement portions.

Common for all the above examples is that the first and second engagement portions are arranged to allow frictional slip engagement when connecting the first and second engagement portions.

### BRIEF DESCRIPTION OF THE DRAWINGS

The invention will below be described in connection to a number of drawings, in which:
Figure 1 schematically shows a supercharger with a supercharger clutch arrangement according to figure 2;
Figure 2 schematically shows a supercharger clutch arrangement:
Figure 3 schematically shows the drive line components in the arrangement in figures 1 and 2.
Figure 4a schematically shows an example according to the invention;
Figure 4b schematically shows an example according to the invention;
Figures 5 schematically shows a perspective view and a cross-section of a first engagement portion being a rotor according to the invention;
Figure 6 schematically shows a cross-section of a part of the first and second engagement portions according to the invention;
Figure 7 schematically shows a cross-section of a part of the first and second engagement portions according to prior art;
Figure 8 schematically shows a perspective view of a second engagement portion according to prior art;
Figure 9 shows a front view of a second engagement portion according to the invention;
Figure 10 schematically shows a side view of figure 9; and
Figure 11 schematically shows a cross-section of a clutch arrangement with a second engagement portion according to figures 9 and 10.

### DETAILED DESCRIPTION OF THE DRAWINGS

In the drawings, like components are labelled with like reference numbers.

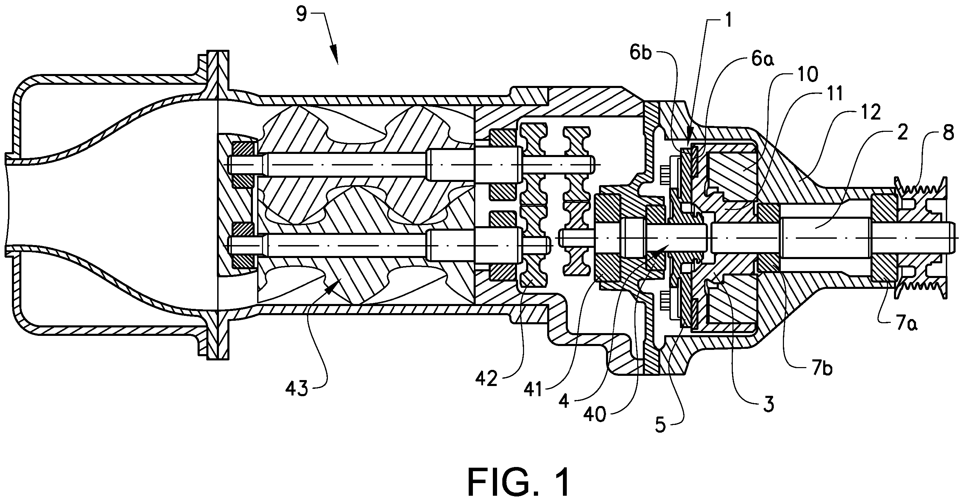

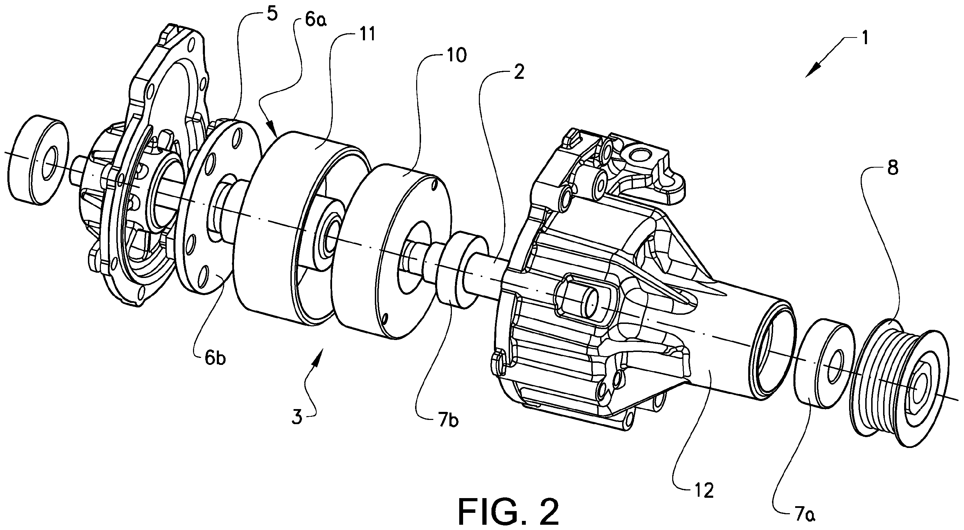

Figure 1 schematically shows a supercharger with a supercharger clutch arrangement 1 according to figure 2 comprising an input shaft 2 connected to a first engagement portion 3 and an output shaft 4 connected to a second engagement portion 5. The first and second engagement portions 3, 5 are arranged to connect and engage each other by frictional forces upon connection via corresponding frictional surfaces 6a, 6b. The input shaft 2 is placed in first and second bearings 7a, 7b.

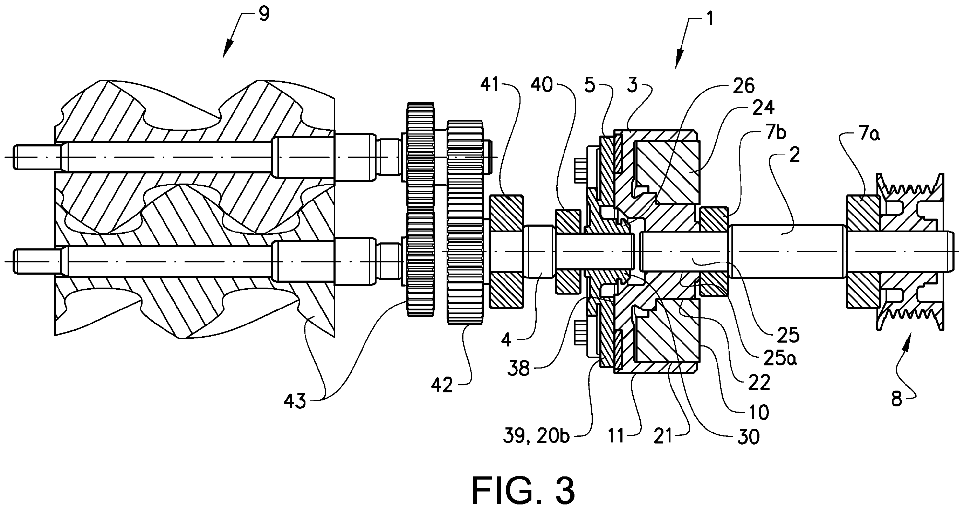

Figure 3 schematically shows drive line components in the arrangement in figures 1 and 2.

The supercharger arrangement in figure 1 and 2 comprises a pulley 8 on one end of the input shaft 2 and the first engagement portion 3 on the other end. The output shaft 4 is connected to the second engagement portion 5 on one end and a fan arrangement 9 on the other end.

The clutch arrangement 1 in figures 1 and 2 is an electromagnetic clutch arrangement. The first engagement portion 3 comprises a coil 10 and a rotor 11 comprising electromagnetic material for engaging and disengaging the first and second engagement portions 3, 5. The rotor 11 comprises the frictional surface 6a. The second engagement portion 5 comprises an electromagnetic material in the frictional surface 6b that interacts with the electromagnetic material in the first engagement portion 3 when the coil 10 is activated and an electromagnetic flux is generated in the electromagnetic material in the first engagement portion 3. The interaction refers to an electromagnetic attraction between the first engagement portion 3 and the second engagement portion 5 upon engagement of the clutch. The electromagnetic attraction makes the first and second engagement portions 3, 5 attracted to each other and the higher the current generating the electromagnetic field, the more attraction.

When the clutch 1 is engaged, the first and second engagement portions 3, 5 are brought into contact by the electromagnetic force, but the difference in rotational speed gives a gradual increase in engagement for revving up the second engagement portion 5. The gradual increase in engagement is possible due to the frictional forces and that the contact surfaces 6a, 6b, i.e. the frictional surfaces 6a, 6b, between the first engagement portion 3 and the second engagement portion 5 are allowed to glide against each other at the same time. This friction and gliding phase until the first and second engagement portion rotate at the same speed, hereinafter is called "slip".

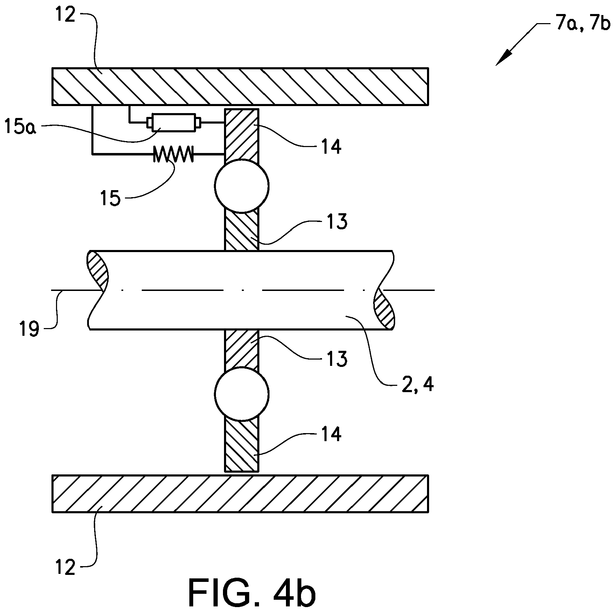

According to the invention, the first and/or second bearing 7a, 7b are arranged to allow the input shaft to slide in an axial direction a predetermined distance X, see figure 4b.

During clutch engagement and slip, the ability for the input shaft to slide axially in the first and/or second bearing 7a, 7b significantly reduce torsional, axial and bending vibrations of the input shaft 2 and thus corresponding vibrations of the first and second engagement portions 3, 5 and consequently also for the output shaft 4. Hence, acoustic noise is significantly reduced or annihilated during slip. A further advantage is significantly reduced wear of the clutch material, i.e. of the friction material of the first and second engagement portions 3, 5.

Reasons for the advantages of an axially compliant first and/or second bearing 7a, 7b may be summarized in less coupling of modal behavior in different directions, such as in bending, in torsion and axial modes. Further reasons are a resulting constant load distribution between the bearings as well as a proportional loading of axial and radial directions within each bearing, respectively.

In figure 1 and 2, the first and/or second bearing 7a, 7b is fixedly attached to the input shaft 2 and to a cover 12 which means that the increased compliance gives the axial sliding ability of the input shaft 2.

According to one example, the allowed sliding depends on axial clearance Y, see figure 4b, which in turn depends on tolerances in the bearing and the size of the bearing. For example, bearing dimension of approx. 22 mm inner diameter of inner race and approx. 45 mm outer diameter of outer race would give high axial clearance in range from about 50 µm to more than 2 mm. Corresponding reasonable radial clearance of such a bearing would be larger than 12 µm and in range from 30 µm to at least 60 µm. For other bearing dimensions and shaft dimensions it is assumed similar relations of dimension proportions.

During clutch engagement and slip, the ability for the input shaft to slide axially significantly reduce torsional-, axial and bending vibrations of the input shaft and thus corresponding vibrations of the first and second engagement portions and consequently also for the output shaft. Hence, acoustic noise is significantly reduced or annihilated during slip. A further advantage is significantly reduced wear of the clutch material, i.e. of the friction material of the first and second engagement portions 3, 5.

Reasons for the advantages of an axially compliant first and/or second bearing 7a, 7b may be summarized in less coupling of modal behavior in different directions, such as in bending, in torsion and axial modes. Further reasons are a resulting constant load distribution between the bearings as well as a proportional loading of axial and radial directions within each bearing, respectively.

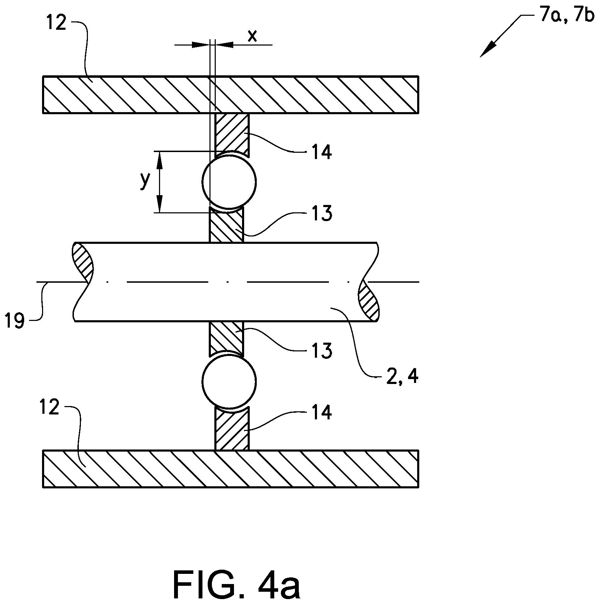

In figure 1, 2 and 3 the first and/or second bearing 7a, 7b is fixedly attached to the input shaft 2 and to a cover 12 which means that the increased compliance gives the axial sliding ability of the input shaft 2. This is shown in figure 4a.

Figure 4b schematically shows a different example embodiment according to the invention on how the first and/or second bearing are arranged to allow the input shaft 2 to slide in the axial direction. In figure 4b the first and/or second bearing 7a, 7b is fixedly attached to the input shaft by an inner race 13 and wherein an outer race 14 is movably positioned in a cover 12 in the axial direction. In figure 4b the outer race 14 is attached to the cover 12 via a resilient member 15. The resilient member 15 is advantageously a spring being preloaded to exert pressure between the cover 12 and the outer race 14. In figure there is also a damper/attenuator 15a positioned between the outer race 14 and the cover 12.

Introducing a bearing with an outer race 14 that is floating in axial direction, plus a preload to remove the internal clearance, allows compliance. This reduces the risk of rotor wobbling. The values of the axial pre-load and axial spring stiffness need to be well balanced, for example a stiffness up to 1000 N/mm and a preload within 0-1000N, more specifically a stiffness between 10-200N/mm and a preload within 50-400N has been shown to have a good balance. If the rotor wobbling is avoided the risk of omitting noise during clutch engagement is reduced.

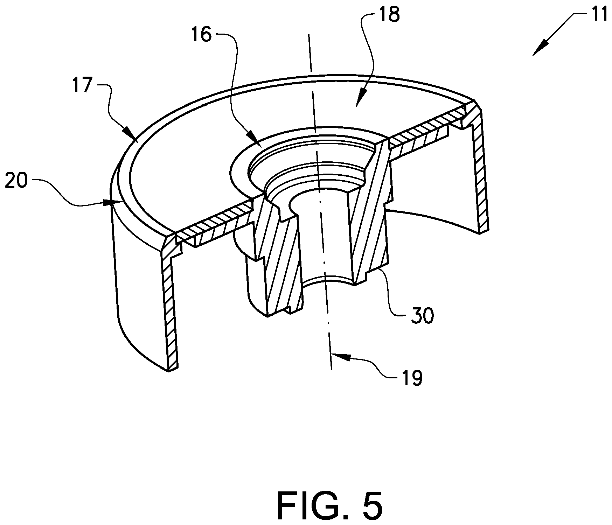

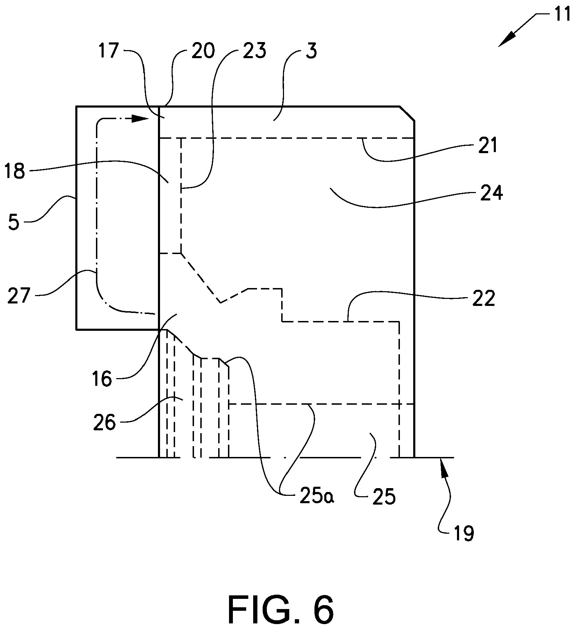

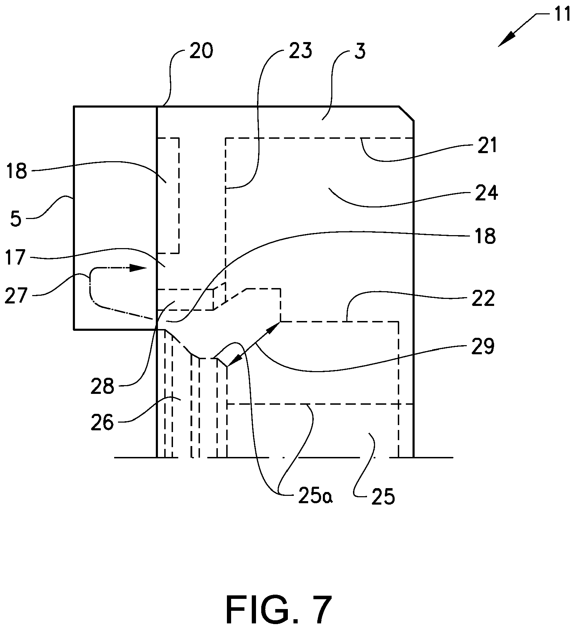

Figures 5 and 6 schematically shows that the first engagement portion 3 comprises a first electromagnetic material strip 16, a second electromagnetic strip 17 and a friction strip 18 of non-electromagnetic material there between. The first engagement portion 3 is rotation symmetric about an axially extended centrum axis 19 of the input shaft 2 and wherein the first electromagnetic material strip 16, the second electromagnetic strip 17 and the friction strip 18 are arranged in a rotation symmetric manner about the centrum axis 19. One benefit of separating the first and second electromagnetic material strips 16, 17 by the friction strip 18 is that the electromagnetic attraction force between the first engagement portion 3 and the second engagement portion 5 is positioned far out from the rotational centre of the first engagement portion 3 and the second engagement portion 5 and therefore gives the benefit of a more even radial distribution of surface engagement between the first engagement portion 3 and the second engagement portion 5. Another advantage is that when the frictional surfaces are getting worn, the pressure between the surfaces will not be allocated to the centre of the first engagement portion 3 and the second engagement portion 5 as in prior art shown in figure 7, but instead allocated to an outer portion with relation to rotation centre.

In figures 5 and 6 the second electromagnetic material strip 17 is arranged in connection to an outer edge 20 of the first engagement portion 3. This enhances the allocation of attraction force to the utmost portion of the first engagement portion 3 and the second engagement portion 5.

The first electromagnetic strip 16 could be position close to the rotation centre, i.e. the centrum axis 19, or at a distance from the rotation centre, but it is a trade-off for the width of the friction strip to be considered during design of the first engagement portion 3.

Figures 5 and 6 schematically show a first engagement portion 3 in the form of a rotor 11 in an electromagnetic clutch according to figures 1-3. The rotor 11 comprises an outer wall 21 extending in the axial direction and an inner wall 22 extending in the axial direction. The outer wall 21 and the inner wall 22 are connected by a plate 23 comprising the friction strip 18 and the first and second electromagnetic strips 16, 17. The outer wall 21, the inner wall 22 and the plate 23 create a space 24 in which the coil in figure 1 is positioned for creating the electromagnetic flux in the first and second electromagnetic strips 16, 17. The rotor 11 also comprises a channel 25 intended to fit the input shaft 2. The channel has a widening portion 26 towards the second engagement portion 5 for receiving a protruding portion from the second engagement portion 5 during engagement and slip. The material between the channel 25 and the inner wall 22 of the space 24 is electromagnetic to guide the flux from the coil to the first electromagnetic strip 16. The material building the outer wall 21 is also electromagnetic to guide the flux from the second engagement portion 5 back to the coil 10. The rotor 11 may comprise reinforcing material between the inner wall 22 and the outer wall 22 supporting the friction strip 18.

Figure 6 schematically shows a cross-section of a part of the first and second engagement portions 3, 5 according to the invention. In figure 6, a dotted arrow 27 shows the flux path from the first electromagnetic strip 16 in the first engagement portion 3 to the second electromagnetic strip 17, via the second engagement portion 5.

Creating a design that during the engagement keeps contact pattern from forming on the inner diameter of the clutch has proven central to avoid rotor wobbling. If the rotor wobbling is avoided the risk of omitting noise during clutch engagement and slip is reduced.

Figure 7 schematically shows a cross-section of a part of the first and second engagement portions 3, 5 according to prior art. In figure 7, a dotted arrow 27 shows the flux path from the first electromagnetic strip 16 in the first engagement portion 3 to the second electromagnetic strip 17, via the second engagement portion 5. The difference between the arrangement according to figure 6 is that in figure 7 the friction strip 18 is positioned outside of both the first and second electromagnetic strips 16, 17, but is separated by an opening 28. In figure 7 it is clear that the electromagnetic attraction force is concentrated to the centre of the first and second engagement portions 3, 5. In figure 6 it is on the contrary clear that the electromagnetic attraction force is spread over a larger surface including the friction strip 18 compared to the arrangement in figure 7.

Figure 7 also shows with a solid arrow 29 a thickness of material in the back bone of the first engagement portion 3. When the first engagement means 3 is a rotor in an electromagnetic clutch according to figures 1-6, the arrow shows the material between the channel 25 and the inner wall 22 of the space 24. According to an example embodiment of the invention, the thickness of material should be thin enough to give a resilient feature of the rotor between the widening portion 26 and the inner wall 22 such that an outer portion 20b of the rotor may flex compared to a hub portion 25a of the rotor 11. The hub portion 25a typically comprises the channel 25 and the widening portion 26. The possibility to flex gives an advantage that when the second engagement portion 5 exerts pressure on the first engagement portion 3, the hub portion 25a may give after somewhat which increases the engagement of the outer portion 20b. An increased engagement of the outer portion 20b has proven to give less noise during slip. The resilient feature is also possible and especially advantageous with an arrangement according to figure 6, since it enhances the engagement of the outer portion 20b comprising the second electromagnetic strip 17.

In both figures 6 and 7, the hub unit 30 in the second engagement portion 3 has been left out of the drawing.

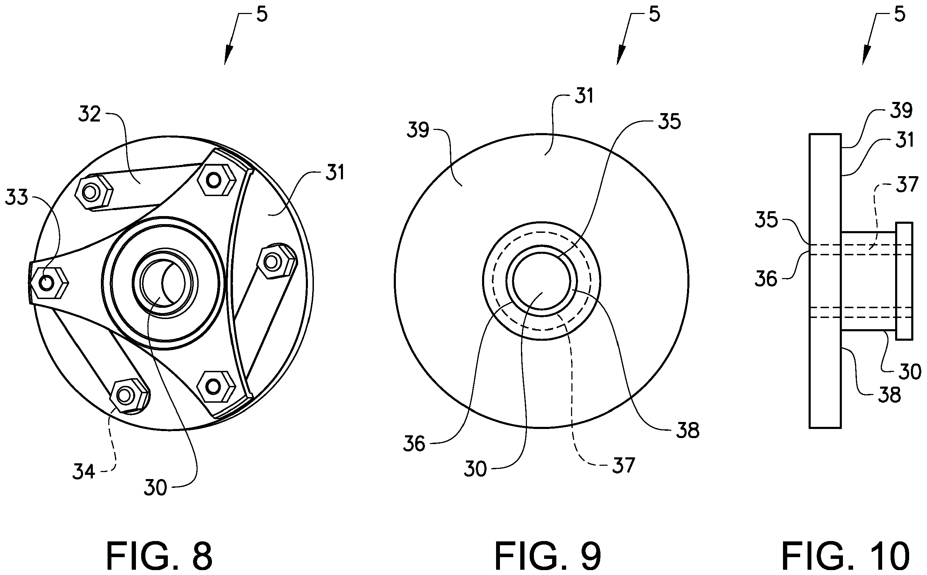

Figure 8 schematically shows a perspective view of a second engagement portion 5 according to prior art. The second engagement portion 5 comprises a hub unit 30 intended to be connected to the outer shaft. The hub unit 30 is connected to a friction plate 31, comprising the frictional surface 6b, via leaf springs 32 being mounted by bolts 33 via through holes 34 in the friction plate to an outer portion of the friction plate 31. The bolts 33 and the through holes 34 give the friction plate 31 an uneven tension in the friction plate 31 which may give an uneven surface, especially after having been subject to friction and thus heat, and the problem with wobbling noise.

Figure 9 shows a front view of a second engagement portion 5 according to the invention and figure 10 shows a side view of figure 9.

In figures 9 and 10 the second engagement portion 5 comprises a hub unit 30 attached to the output shaft 4 and comprising splines on an outer surface 35. The second engagement portion 5 comprises a friction plate 31 that connects to the first engagement portion 3 upon engagement of the clutch. The friction plate 31 comprises splines on an inner surface 36. The friction plate 31 is slidably mounted on the hub unit 30 in an axial direction of the output shaft 4 via the splines. The second engagement portion 5 comprises a spring arrangement 37 arranged in connection to the hub unit 30 and the friction plate 31. The spring arrangement 37 is arranged to apply a force onto the friction plate 31 in a direction away from the first engagement portion 3. The spring arrangement 37 exerts pressure on an inner central portion 38 of the friction plate 31. During slip the fiction plate 31 is drawn to the first engagement portion by the electromagnetic forces. The spring arrangement 37 exerts pressure only on the inner central portion 38 in a direction away from the first engagement portion 3 which gives that the friction plate 31 tend to bend with an outer portion 39 of the friction plate 31 towards the first engagement portion 3 which increases a more even slip and less noise. The arrangement in figure 6 with an electromagnetic flux distribution over the friction strip 18 and/or a more weak central structure of the rotor 11 as described in figure 7 is especially suitable in combination with the centrally mounted spring arrangement in figures 9 and 10 since this increases an engagement of the rotor 11 and the friction plate 31 far out from rotation centre. The second engagement portion 5 comprising the spring arrangement 37 arranged in connection to the hub unit 30 and the friction plate 31 in figures 9 and 10 is suitable also for the examples shown in figures 1-7 and 11.

One benefit with the centrally mounted spring arrangement 37 is that there are no mounts on the friction plate 31, which makes the friction plate 31 easier to get rotation symmetric and thus less unevenness and wobbling noise during slip. A further advantage is that during slip, the electromagnetic attraction force pulls the friction plate 31 towards the first engagement portion 3, but the spring arrangement exerts a force on the inner central portion 38 of the friction plate 31 which makes the outer portion 39 of the friction plate to be more engaged.
In figures 9 and 10, the spring arrangement 37 is positioned on that side of the second engagement portion 5 that faces the first engagement portion 3. However, the spring arrangement 37 could be positioned on that side of the second engagement portion 5 that faces away from the first engagement portion 3.
The spring arrangement 37 are known per se in prior art. The spring arrangement may be a rotation symmetric spring arrangement in the form of a ring or any other suitable spring arrangement.

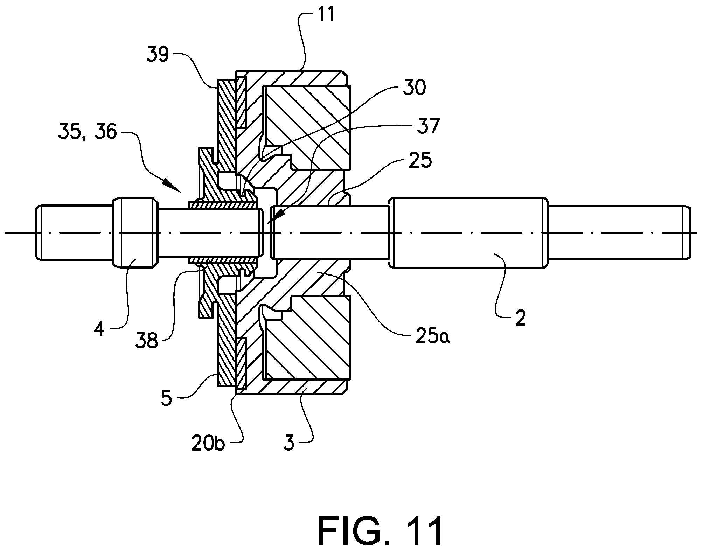

Figure 11 schematically shows a cross-section of a clutch arrangement with a second engagement portion according to claim 9 and 10.
For all examples in figures 1-11 the friction plate 31 is made of an electromagnetic material in an electromagnetic clutch arrangement. It is known to the person skilled in the suitable electromagnetic materials that also has the ability to serve as a friction material in a clutch arrangement.

Creating a design which during the engagement help center the second engagement portion 5 relative to the first engagement portion 3, i.e. e.g. the rotor 11 advantageously avoids a rotating resulting contact force on the rotor. This gives a uniform contact pattern around the circumferential parts of the first and second engagement portions 3, 5, which has been proven to be an important factor to avoid rotor wobbling. If the rotor wobbling is avoided the risk of omitting noise during clutch engagement and slip is reduced.

According to one example not shown, the corresponding frictional surfaces 6a, 6b are three dimensionally formed and each other's mirror images, i.e. congruent, for guiding the frictional surfaces 6a, 6b towards each other for rotation about a common rotational axis coinciding with the rotational axis of the input shaft 2. The surfaces may be conical, convex/concave, or any other suitable shape that guides the surfaces to a common rotational centre during slip.

According to one example not shown, the input shaft 2 and the output shaft 4 comprise guiding means for guiding the shafts to a common rotational axis upon connection during slip. The clutch arrangement 1 comprises a pilot bearing arranged on the input shaft and/or the output shaft 4 for allowing different rotational speed of the shafts 2, 4.

Creating a design that during the engagement helps center the second engagement portion relative to the rotor, advantageously avoids a rotating resulting contact force. This gives a uniform contact pattern around the circumferential parts of the first and second engagement portions, which has been proven to be an important factor. If the rotor wobbling is avoided the risk of omitting noise during clutch engagement and slip is reduced.

According to one example not shown, a tuned vibrational damper is arranged on the input shaft and/or the output shaft. The tuned vibrational damper is advantageously tuned to supress the first main system torsion Eigen frequency of the rotating first and second engagement portions upon connection.

The tuned vibrational damper is also arranged and tuned to suppress the main axial vibration mode, at a frequency in the same range as the torsion mode. It may be positioned at any location along the input shaft or alternatively on the output shaft, however the most efficient location is on the input shaft, close to the clutch engagement. This measure will significantly reduce or annihilate the torsional and axial vibrations, besides due to modal coupling also significantly reduce the bending vibrations over the clutch rotor. Thus, the measure will annihilate or significantly reduce the noise and the clutch wear problem as described above. The damper may be used together with any one of the arrangement in figures 1-11 or as a stand-alone enhancement.

According to the example shown in figure 1, the output shaft 4 is placed in a third and fourth bearing 40, 41. A transmission unit 42 is positioned on the output shaft 4 for engagement of a compressor unit 43, wherein the third and fourth bearings 40, 41 are positioned between the transmission unit 42 and the second engagement unit 5.

In one example not shown, the output shaft is placed in a fifth bearing positioned on the other side of the transmission unit with relation to the third and fourth bearing for reducing shaft misalignment due to pressure from the compressor unit. Hence, this gives an improvement of bearing attachment at both the input shaft and the output shaft, in order to reduce shaft misalignment over the clutch. This may change the bearing solution of the gear arrangement to avoid bending moment of the output shaft, due to shaft over hang and unsupported gear blank on far end of output shaft. This measure reduces the modal coupling between bending and torsion vibrations and also significantly reducing these vibrations as well. Thus the measure will annihilate or significantly reduce the noise and clutch wear problems as described above.

A clutch arrangement according to a combination of any one of the examples described above would give the benefits of reduced noise.

## Claims

1. A supercharger clutch arrangement (1) comprising an input shaft (2) connected to a first engagement portion (3) and an output shaft (4) connected to a second engagement portion (5), the first and second engagement portions (3, 5) being arranged to connect and engage each other by frictional forces upon connection via corresponding frictional surfaces (6a, 6b), the input shaft (2) being placed in first and second bearings (7a, 7b), wherein
the first and/or second bearing (7a, 7b) are arranged to allow the input shaft (2) to slide in an axial direction,
**characterized in that**
the second engagement portion (5) comprises:
a hub unit (30) attached to the output shaft (4) and comprising splines on an outer surface (35),
a friction plate (31), wherein the friction plate (31) connects to the first engagement portion upon engagement of the clutch,
wherein the friction plate (31) comprising splines on an inner surface (36), wherein the friction plate (31) via the splines being slidably mounted on the hub unit (8) in an axial direction of the output shaft (4), and
a spring arrangement (37), wherein the spring arrangement (37) is arranged in connection to the hub unit (30) and the friction plate (31), and wherein
the spring arrangement (37) is arranged to apply a force onto an inner central portion (38) of the friction plate (31) in a direction away from the first engagement portion (3), such that the friction plate (31) bends with an outer portion (39) of the friction plate (31) towards the first engagement portion (3) during slip of the clutch (1).

2. A clutch arrangement (1) according to claim 1, wherein the first and/or second bearing (7a, 7b) has an axial clearance that allows for the input shaft (2) to slide axially a predetermined distance.

3. A clutch arrangement (1) according to any one of the preceding claims, wherein the first and/or second bearing (7a, 7b) is fixedly attached to the input shaft (2) and to a cover (12).

4. A clutch arrangement (1) according to any one of claims 1-2, wherein the first and/or second bearing (7a, 7b) is fixedly attached to the input shaft (2) by an inner race (13) and wherein an outer race (14) is movably positioned in a cover (12) in the axial direction.

5. A clutch arrangement (1) according to claim 4, wherein the outer race (14) is attached to the cover (14) via a resilient member (15).

6. A clutch arrangement (1) according to any one of the preceding claims, wherein
the first engagement portion (3) comprises a first electromagnetic material strip (16), a second electromagnetic strip (17) and a friction strip (18) of non-electromagnetic material there between, wherein the first engagement portion (3) being rotation symmetric about an axially extended centrum axis (19) of the input shaft (2) and wherein the first electromagnetic material strip (16), the second electromagnetic strip (17) and the friction strip (18) being arranged in a rotation symmetric about the centrum axis (19).

7. A clutch arrangement (1) according to any one of the preceding claims, wherein the clutch arrangement (1) is an electromagnetic clutch arrangement, wherein the first engagement portion (3) comprising a coil (10) and a rotor (11) for engaging and disengaging the first and second engagement portions (3, 5), wherein the rotor comprising the frictional surface (6a) and an electromagnetic material and wherein the second engagement portion (5) comprises an electromagnetic material.

8. A clutch arrangement (1) according to any one of the preceding claims, wherein the corresponding frictional surfaces (6a, 6b) are three dimensionally formed and congruent for guiding the frictional surfaces (6a, 6b) towards each other for rotation about a common rotational axis coinciding with the rotational axis of the input shaft (2).

9. A clutch arrangement (1) according to any one of the preceding claims, wherein the input shaft (2) and the output shaft (4) comprise guiding means for guiding the shafts (2, 4) to a common rotational axis upon connection, wherein the clutch arrangement (1) comprising a pilot bearing arranged on the input shaft and/or the output shaft (4) for allowing different rotational speed of the shafts (2, 4) upon connection.

10. A clutch arrangement (1) according to any one of the preceding claims, wherein a tuned vibrational damper is arranged on the input shaft (2) and/or the output shaft (4).

11. A clutch arrangement (1) according to any one of the preceding claims, wherein the output shaft (4) is placed in a third and fourth bearing (40, 41).

12. A clutch arrangement (1) according to claim 11, wherein a transmission unit (42) is positioned on the output shaft (2) for engagement of a compressor unit (43), wherein the third and fourth bearings (40, 41) are positioned between the transmission unit (42) and the second engagement unit (5), wherein the output shaft (4) is placed in a fifth bearing positioned on the other side of the transmission unit (42) with relation to the third and fourth bearing (40, 41) for reducing shaft misalignment due to pressure from the compressor unit (43).

13. A clutch arrangement (1) according to any one of the preceding claims, wherein the first and second engagement portions (3, 5) are arranged to allow frictional slip engagement when connecting the first and second engagement portions (3, 5).

14. A clutch arrangement (1) according to any one of the preceding claims, wherein the first engagement portion (3) being in the form of a rotor (11) comprising an outer wall (21) extending in the axial direction and an inner wall (22) extending in the axial direction, wherein the outer wall (21) and the inner wall (22) are connected by a plate (23) comprising a friction strip (18) and first and second electromagnetic strips (16, 17), wherein the outer wall (21), the inner wall (22) and the plate (23) create a space (24) in which a coil (12) being positioned for creating electromagnetic flux in the first and second electromagnetic strips (16, 17), the rotor (11) comprising a hub portion (25a) comprising a channel (25) for fitting the input shaft (2), wherein the channel (25) having a widening portion (26) towards the second engagement portion (5) for receiving a protruding portion (30) from the second engagement portion (5) during engagement, wherein the thickness of material between the channel (25) and the inner wall (22) of the space (24) is thin enough to give a resilient feature of the rotor between the widening portion (26) and the inner wall (22) such that an outer portion (20b) of the rotor may flex compared to the hub portion (25a) of the rotor (11).

## Patentansprüche

1. Aufladekupplungsanordnung (1), umfassend eine Antriebswelle (2), die mit einem ersten Eingriffsabschnitt (3) verbunden ist, und eine Abtriebswelle (4), die mit einem zweiten Eingriffsabschnitt (5) verbunden ist, wobei der erste und der zweite Eingriffsabschnitt (3, 5) so angeordnet sind, dass sie sich bei Verbindung über entsprechende Reibungsflächen (6a, 6b) durch Reibungskräfte miteinander verbinden und miteinander in Eingriff bringen, wobei die Antriebswelle (2) in einem ersten und einem zweiten Lager (7a, 7b) platziert ist, wobei das erste und/oder das zweite Lager (7a, 7b) so angeordnet sind bzw. ist, dass sie ein Gleiten der Antriebswelle (2) in einer axialen Richtung ermöglichen,
**dadurch gekennzeichnet, dass**
der zweite Eingriffsabschnitt (5) Folgendes umfasst:
eine Nabeneinheit (30), die an der Abtriebswelle (4) angebracht ist und Rippen auf einer Außenfläche (35) umfasst,
eine Reibungsplatte (31), wobei sich die Reibungsplatte (31) bei Eingriff der Kupplung mit dem ersten Eingriffsabschnitt verbindet,
wobei die Reibungsplatte (31) Rippen auf einer Innenfläche (36) umfasst, wobei die Reibungsplatte (31) über die Rippen auf gleitbare Weise an der Nabeneinheit (8) in einer axialen Richtung der Abtriebswelle (4) befestigt ist, und
eine Federanordnung (37), wobei die Federanordnung (37) in Verbindung mit der Nabeneinheit (30) und der Reibungsplatte (31) angeordnet ist, und wobei die Federanordnung (37) so angeordnet ist, dass sie eine Kraft auf einen inneren Mittelabschnitt (38) der Reibungsplatte (31) in einer von dem ersten Eingriffsabschnitt (3) weg weisenden Richtung auf eine solche Weise ausübt, dass sich die Reibungsplatte (31) bei einem Schlupf der Kupplung (1) mit einem äußeren Abschnitt (39) der Reibungsplatte (31) in Richtung zu dem ersten Eingriffsabschnitt (3) biegt.

2. Kupplungsanordnung (1) nach Anspruch 1, wobei das erste und/oder das zweite Lager (7a, 7b) einen axialen Spielraum aufweisen bzw. aufweist, der ein axiales Gleiten der Antriebswelle (2) um einen vorgegebenen Abstand ermöglicht.

3. Kupplungsanordnung (1) nach einem der vorhergehenden Ansprüche, wobei das erste und/oder das zweite Lager (7a, 7b) fest an der Antriebswelle (2) und an einer Abdeckung (12) angebracht sind bzw. ist.

4. Kupplungsanordnung (1) nach einem der Ansprüche 1 bis 2, wobei das erste und/oder das zweite Lager (7a, 7b) über eine innere Laufbahn (13) fest an der Antriebswelle (2) angebracht ist und wobei eine äußere Laufbahn (14) in axialer Richtung beweglich in einer Abdeckung (12) positioniert ist.

5. Kupplungsanordnung (1) nach Anspruch 4, wobei die äußere Laufbahn (14) über ein elastisches Element (15) an der Abdeckung (14) angebracht ist.

6. Kupplungsanordnung (1) nach einem der vorhergehenden Ansprüche, wobei der erste Eingriffsabschnitt (3) einen ersten Streifen (16) aus einem elektromagnetischen Material, einen zweiten elektromagnetischen Streifen (17) und einen Reibungsstreifen (18) aus einem nicht elektromagnetischen Material zwischen denselben umfasst, wobei der erste Eingriffsabschnitt (3) drehsymmetrisch um eine sich axial erstreckende Zentrumsachse (19) der Antriebswelle (2) ist und wobei der erste Streifen (16) aus einem elektromagnetischen Material, der zweite elektromagnetische Streifen (17) und der Reibungsstreifen (18) in einer symmetrisch um die Zentrumsachse (19) verlaufenden Drehung angeordnet sind.

7. Kupplungsanordnung (1) nach einem der vorhergehenden Ansprüche, wobei es sich bei der Kupplungsanordnung (1) um eine elektromagnetische Kupplungsanordnung handelt, wobei der erste Eingriffsabschnitt (3) eine Spule (10) und einen Rotor (11) umfasst, um den ersten und den zweiten Eingriffsabschnitt (3, 5) in Eingriff und außer Eingriff zu bringen, wobei der Rotor die Reibungsfläche (6a) und ein elektromagnetisches Material umfasst und wobei der zweite Eingriffsabschnitt (5) ein elektromagnetisches Material umfasst.

8. Kupplungsanordnung (1) nach einem der vorhergehenden Ansprüche, wobei die entsprechenden Reibungsflächen (6a, 6b) dreidimensional ausgebildet und kongruent sind, um die Reibungsflächen (6a, 6b) zur Drehung um eine gemeinsame Drehachse, die mit der Drehachse der Antriebswelle (2) zusammenfällt, zueinander zu führen.

9. Kupplungsanordnung (1) nach einem der vorhergehenden Ansprüche, wobei die Antriebswelle (2) und die Abtriebswelle (4) Führungsmittel umfassen, um die Wellen (2, 4) bei Verbindung zu einer gemeinsamen Drehachse zu führen, wobei die Kupplungsanordnung (1) ein Führungslager umfasst, das an der Antriebswelle und/oder der Abtriebswelle (4) angeordnet ist, um bei Verbindung unterschiedliche Umdrehungsgeschwindigkeiten der Wellen (2, 4) zu ermöglichen.

10. Kupplungsanordnung (1) nach einem der vorhergehenden Ansprüche, wobei ein abgestimmter Schwingungsdämpfer an der Antriebswelle (2) und/oder der Abtriebswelle (4) angeordnet ist.

11. Kupplungsanordnung (1) nach einem der vorhergehenden Ansprüche, wobei die Abtriebswelle (4) in einem dritten und einem vierten Lager (40, 41) platziert ist.

12. Kupplungsanordnung (1) nach Anspruch 11, wobei eine Getriebeeinheit (42) zum Eingriff mit einer Verdichtereinheit (43) an der Abtriebswelle (2) positioniert ist, wobei das dritte und das vierte Lager (40, 41) zwischen der Getriebeeinheit (42) und der zweiten Eingriffseinheit (5) positioniert sind, wobei die Abtriebswelle (4) in einem fünften Lager platziert ist, das in Bezug auf das dritte und das vierte Lager (40, 41) auf der anderen Seite der Getriebeeinheit (42) positioniert ist, um eine falsche Ausrichtung der Welle auf Grund von Druck von der Verdichtereinheit (43) zu reduzieren.

13. Kupplungsanordnung (1) nach einem der vorhergehenden Ansprüche, wobei der erste und der zweite Eingriffsabschnitt (3, 5) so angeordnet sind, dass sie bei Verbindung des ersten und des zweiten Eingriffsabschnitts (3, 5) einen Reibungsschlupfeingriff ermöglichen.

14. Kupplungsanordnung (1) nach einem der vorhergehenden Ansprüche, wobei der erste Eingriffsabschnitt (3) in Form eines Rotors (11) vorliegt, der eine sich in axialer Richtung erstreckende Außenwand (21) und eine sich in axialer Richtung erstreckende Innenwand (22) umfasst, wobei die Außenwand (21) und die Innenwand (22) durch eine Platte (23), die einen Reibungsstreifen (18) und den ersten und den zweiten elektromagnetischen Streifen (16, 17) umfasst, verbunden sind, wobei die Außenwand (21), die Innenwand (22) und die Platte (23) einen Raum (24) schaffen, in dem eine Spule (12) zur Erzeugung eines elektromagnetischen Flusses in dem ersten und dem zweiten elektromagnetischen Streifen (16, 17) positioniert ist, wobei der Rotor (11) einen einen Kanal (25) umfassenden Nabenabschnitt (25a) zum Einbau der Antriebswelle (2) umfasst, wobei der Kanal (25) einen sich zu dem zweiten Eingriffsabschnitt (5) erweiternden Abschnitt (26) aufweist, um während des Eingriffs einen vorstehenden Abschnitt (30) von dem zweiten Eingriffsabschnitt (5) aufzunehmen, wobei die Dicke des Materials zwischen dem Kanal (25) und der Innenwand (22) des Raums (24) dünn genug ist, um ein elastisches Merkmal des Rotors zwischen dem sich erweiternden Abschnitt (26) und der Innenwand (22) auf eine solche Weise zu ergeben, dass sich ein äußerer Abschnitt (20b) des Rotors im Vergleich zu dem Nabenabschnitt (25a) des Rotors (11) biegen kann.

## Revendications

1. Agencement d'embrayage de surcompresseur (1), comprenant un arbre d'entrée (2) raccordé à une première portion d'enclenchement (3) et un arbre de sortie (4) raccordé à une deuxième portion d'enclenchement (5), les première et deuxième portions d'enclenchement (3, 5) étant agencées pour un raccordement et enclenchement mutuel par des forces de friction suite au raccordement par l'intermédiaire de surfaces de friction (6a, 6b) correspondantes, l'arbre d'entrée (2) étant placé sur des premier et deuxième paliers (7a, 7b), dans lequel le(s) premier et/ou deuxième palier(s) (7a, 7b) est/sont agencé(s) pour permettre à l'arbre d'entrée (2) de coulisser dans une direction axiale,
**caractérisé en ce que** la deuxième portion d'enclenchement (5) comprend :
une unité de moyeu (30) rattachée à l'arbre de sortie (4) et comprenant des cannelures sur une surface extérieure (35),
une plaque de friction (31), la plaque de friction (31) étant raccordée à la première portion d'enclenchement suite à l'enclenchement de l'embrayage,
dans lequel la plaque de friction (31) comprend des cannelures sur une surface intérieure (36), la plaque de friction (31) étant montée coulissante par l'intermédiaire des cannelures sur l'unité de moyeu (8) dans une direction axiale de l'arbre de sortie (4), et
un agencement de ressort (37), l'agencement de ressort (37) étant agencé en connexion avec l'unité de moyeu (30) et la plaque de friction (31), et dans lequel
l'agencement de ressort (37) est agencé pour exercer une force sur une portion centrale intérieure (38) de la plaque de friction (31) dans une direction s'éloignant de la première portion d'enclenchement (3) de telle sorte que la plaque de friction (31) fléchit avec une portion extérieure (39) de la plaque de friction (31) vers la première portion d'enclenchement (3) lorsque l'embrayage (1) patine.

2. Agencement d'embrayage (1) selon la revendication 1, dans lequel le(s) premier et/ou deuxième palier(s) (7a, 7b) présente(nt) un jeu axial qui permet à l'arbre d'entrée (2) de coulisser axialement sur une distance prédéterminée.

3. Agencement d'embrayage (1) selon l'une quelconque des revendications précédentes, dans lequel le(s) premier et/ou deuxième palier(s) (7a, 7b) est/sont solidement rattaché(s) à l'arbre d'entrée (2) ou à un couvercle (12).

4. Agencement d'embrayage (1) selon l'une quelconque des revendications 1 à 2, dans lequel le(s) premier et/ou deuxième palier(s) (7a, 7b) est/sont solidement rattaché(s) à l'arbre d'entrée (2) par une bague intérieure (13), et dans lequel une bague extérieure (14) est positionnée de façon mobile dans un couvercle (12) dans la direction axiale.

5. Agencement d'embrayage (1) selon la revendication 4, dans lequel la bague extérieure (14) est rattachée au couvercle (14) par l'intermédiaire d'un élément élastique (15).

6. Agencement d'embrayage (1) selon l'une quelconque des revendications précédentes, dans lequel la première portion d'enclenchement (3) comprend une première bande en matériau électromagnétique (16), une deuxième bande en matériau électromagnétique (17), et une bande de friction (18) en matériau non électromagnétique entre celles-ci, la première portion (3) étant symétrique en rotation autour d'un axe central (19) s'étendant axialement de l'arbre d'entrée (2), et la première bande en matériau électromagnétique (16), la deuxième bande en matériau électromagnétique (17) et la bande de friction (18) étant agencées en symétrie de rotation autour de l'axe central (19).

7. Agencement d'embrayage (1) selon l'une quelconque des revendications précédentes, dans lequel l'agencement d'embrayage (1) est un agencement d'embrayage électromagnétique, la première portion d'enclenchement (3) comprenant une bobine (10) et un rotor (11) pour enclencher et désenclencher les première et deuxième portions d'enclenchement (3, 5), le rotor comprenant la surface de friction (6a) et un matériau électromagnétique et la deuxième portion d'enclenchement (5) comprenant un matériau électromagnétique.

8. Agencement d'embrayage (1) selon l'une quelconque des revendications précédentes, dans lequel les surfaces de friction (6a, 6b) correspondantes sont formées en trois dimensions et conviennent au guidage des surfaces de friction (6a, 6b) les unes vers les autres pour une rotation autour d'un axe de rotation commun coïncidant avec l'axe de rotation de l'arbre d'entrée (2).

9. Agencement d'embrayage (1) selon l'une quelconque des revendications précédentes, dans lequel l'arbre d'entrée (2) et l'arbre de sortie (4) comprennent des moyens de guidage pour guider les arbres (2, 4) vers un axe de rotation commun suite au raccordement, l'agencement d'embrayage (1) comprenant un palier pilote agencé sur l'arbre d'entrée et/ou l'arbre de sortie (4) pour permettre une vitesse de rotation différente des arbres (2, 4) suite au raccordement.

10. Agencement d'embrayage (1) selon l'une quelconque des revendications précédentes, dans lequel un amortisseur de vibrations calibré est agencé sur l'arbre d'entrée (2) et/ou l'arbre de sortie (4).

11. Agencement d'embrayage (1) selon l'une quelconque des revendications précédentes, dans lequel l'arbre de sortie (4) est placé sur un troisième et quatrième palier (40, 41).

12. Agencement d'embrayage (1) selon la revendication 11, dans lequel une unité de transmission (42) est positionnée sur l'arbre de sortie (4) pour enclencher une unité compresseur (43), dans lequel les troisième et quatrième paliers (40, 41) sont positionnés entre l'unité de transmission (42) et la deuxième unité d'enclenchement (5), l'arbre de sortie (4) étant placé sur un cinquième palier positionné de l'autre côté de l'unité de transmission (42) par rapport aux troisième et quatrième paliers (40, 41) pour réduire le désalignement des arbres dû à la pression provenant de l'unité compresseur (43).

13. Agencement d'embrayage (1) selon l'une quelconque des revendications précédentes, dans lequel les première et deuxième portions d'enclenchement (3, 5) sont agencées pour permettre un enclenchement par patinage de friction lorsque les première et deuxième portions d'enclenchement (3, 5) sont raccordées.

14. Agencement d'embrayage (1) selon l'une quelconque des revendications précédentes, dans lequel la première portion d'enclenchement (3) se présente sous la forme d'un rotor (11) comprenant une paroi extérieure (21) s'étendant dans la direction axiale et une paroi intérieure (22) s'étendant dans la direction axiale, dans lequel la paroi extérieure (21) et la paroi intérieure (22) sont raccordées par une plaque (23) comprenant une bande de friction (18) et des première et deuxième bandes électromagnétiques (16, 17), dans lequel la paroi extérieure (21), la paroi intérieure (22) et la plaque (23) créent un espace (24) dans lequel est positionné une bobine (12) pour créer un flux électromagnétique dans les première et deuxième bandes électromagnétiques (16, 17), le rotor (11) comprenant une portion de moyeu (25a) comprenant un passage (25) pour poser l'arbre d'entrée (2), dans lequel le passage (25) présente une portion d'élargissement (26) vers la deuxième portion d'enclenchement (5) pour recevoir une portion en saillie (30) provenant de la deuxième portion d'enclenchement (5) pendant l'enclenchement, dans lequel l'épaisseur de matériau entre le passage (25) et la paroi intérieure (22) de l'espace (24) est suffisamment fine pour conférer une caractéristique élastique du rotor entre la portion d'élargissement (26) et la paroi intérieure (22) de sorte qu'une portion extérieure (20b) du rotor peut fléchir en comparaison avec la portion de moyeu (25a) du rotor (11) .
